(19) Europäisches Patentamt
European Patent Office
Office européen des brevets

(11) Publication number: 0 308 192 B1

(12) **EUROPEAN PATENT SPECIFICATION**

(45) Date of publication of patent specification: **29.12.93**

(51) Int. Cl.[5]: **C08L 81/02**, //(C08L81/02, 33:08)

(21) Application number: **88308485.7**

(22) Date of filing: **14.09.88**

(54) **Polyarylene thioether composition and molded product of the same.**

(30) Priority: **14.09.87 JP 230576/87**

(43) Date of publication of application:
**22.03.89 Bulletin 89/12**

(45) Publication of the grant of the patent:
**29.12.93 Bulletin 93/52**

(84) Designated Contracting States:
**AT BE CH DE ES FR GB GR IT LI LU NL SE**

(56) References cited:

**WPIL, FILE SUPPLIER, AN 87 225920, Derwent Publications Ltd, London, GB; & JP-A-62 151 460 (SUMITOMO CHEM. IND. K.K.) 06-07-1987**

(73) Proprietor: **KUREHA KAGAKU KOGYO KABUSHIKI KAISHA**
**1-9-11, Nihonbashi, Horidome-cho**
**Chuo-ku Tokyo 103(JP)**

(72) Inventor: **Iizuka, Yo**
**1-36-10 Iino**
**Chuodai**
**Iwaki-shi Fukushima-ken(JP)**
Inventor: **Kashiwadate, Ken**
**108-3 Asahidai**
**Kanayama-machi**
**Iwaki-shi Fukushima-ken(JP)**
Inventor: **Endo, Shunzo**
**61-29 Minamidai**
**Kanayama-machi**
**Iwaki-shi Fukushima-ken(JP)**
Inventor: **Katto, Takayuki**
**1-1-5 Nakaoka-machi**
**Iwaki-shi Fukushima-ken(JP)**

(74) Representative: **Woods, Geoffrey Corlett et al**
**J.A. KEMP & CO.**
**14 South Square**
**Gray's Inn**
**London WC1R 5EU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 308 192 B1

Rank Xerox (UK) Business Services
(3.10/3.6/3.3.1)

## Description

The present invention relates to a polyarylene thioether(hereinafter referred to as PATE) composition which has improved toughness and impact strength and to a molded product made of said composition.

PATE has come to be used recently as a crystalline thermoplastic resin excellent in heat-resistance, moldability, chemical-resistance, flame retardancy and rigidity. However, PATE is unsatisfactory in, for example, toughness and impact strength; accordingly improvements of PATE in, for example, toughness and impact strength have been strongly demanded.

To improve the problems of toughness and impact strength, several methods of melt-blending a modifier for impact strength with PATE have been tried.

For instance, JP-A-60-120753/1985 (US-A-4,581,411) discloses a composition for molding which has improved impact strength and crack-resistance, characterized in that the composition contains poly(arylene sulfide) and a polymeric rubber selected from silicone rubber, ethylene-acryl rubber, ethylene-propylene rubber, ethylene-propylene-diene rubber and poly-(butyl acrylate) rubber. The polymeric rubber in present in an amount sufficient to improve the impact strength and/or crack-resistance of the material.

JP-A-61-148268/1986 discloses a composition comprising poly(arylene sulfide), a rubber of an ethylene-propylene-nonconjugated dienecopolymer and a fibrous or granular reinforcing agent.

JP-A-57-202344/1982 (US-A-4,395,512) discloses a poly-(phenylene sulfide) composition excellent in impact strength, crack-resistance and thermal impact strength, which comprises (a) 100 parts by weight of a poly(phenylene sulfide), (b) 10 to 300 parts by weight of an inorganic filler and (c) 1 to 100 parts by weight of a fluorine rubber of 5 ML 1 +10 (at 100 °C) to 300 ML 1 + 10 (at 120 °C) Mooney viscosity (refer to ASTM D 1646).

JP-A-56-118456/1981 discloses an impact-resistant resin composition comprising (i) 100 parts by weight of a poly(arylene sulfide)-series polymer or a reformed material thereof and (ii) more than 1 part by weight and below 100 parts by weight of a block copolymer containing more than one polymer block consisting mainly of a vinyl aromatic compound and more than one polymer block mainly consisting of a conjugated diene compound and satisfying at least one of the following conditions (a) and (b):

(a) over 75% by weight of the vinyl aromatic compound in the copolymer exists an the segment of block-form homopolymer;
(b) the content of 1,2-vinyl bonds is over 15%.

JP-C-54-39856/1979 discloses a flame-retardant resin composition made by adding a compound containg a phenylene sulfide bond and having a melting point of higher than 100 °C, a thermal degradation temperature of higher than 250 °C and a sulfur content of more than 10%, to an organic high molecular compound.

Examples of the organic high molecular compound are a homopolymer or a copolymer of a vinyl monomer such as ethylene, propylene, butylene, pentene, butadiene, isoprene, chloroprene, styrene, alphamethylstyrene, vinyl acetate, esters of acrylic acid, esters of methacrylic acid, methacrylonitrile, polyurethanes, polyamides, polyesters, polyacetals, celluloses and epoxy resins

However, since the melt-processing temperature of PATE is very high and the conventional impact-resistant modifier such as natural rubber, styrene-butadiene rubber, acrylonitrile-butadiene rubber, isoprene rubber or a modified product thereof contains thermally deteriorative aliphatic double bonds in a large number in the molecular chain, such a composition is thermally deteriorated easily at the time of melt-blending; such a modifier is unsuitable to improve the toughness and impact strength of the composition.

Although a composition with improved toughness and impact-strength at a high temperature is obtained by adding a modifier such as poly(n-butyl acrylate), which is a polyacrylate elastomer, to PATE, since the glass transition temperature of poly(n-butyl acrylate) is not so low, the improving effect is poor and unsatisfactory at a low temperature.

On the other hand, although the thermal deterioration at the melt-blending of the modifier of a heat-resistant rubber, such as fluorine-containing rubber or silicone rubber, is small, since such a modifier is expensive and the improving effect thereof is small in the case of adding a small amount thereof, such a modification is uneconomic.

Since an olefin rubber modifier such as ethylene-propylene rubber scarcely contains any aliphatic double bonds, the thermal deterioration thereof is relatively small, and the cost thereof is relatively low. However, since the compatibility thereof with PATE is extremely poor, the improvement of the toughness and impact-strength of the modifier is low. Moreover, there is a problem that the appearance of the molded product obtained therefrom is prone to be poor.

We have found that the toughness and impact-strength of PATE can be improved noticeably by adding a polyacrylate elastomer, which is a cheap rubber-like high polymer having a low glass transition

temperature, as the modifier to PATE. We have also surprisingly found that using a fibrous filler, such as glass fibers, together with the elastomer, provides a particularly remarkable improvement.

The reason for this is assumed to be because the polyacrylate elastomer does not only act as an elastic body for absorbing impact energy and stress but also acts as a coupling agent at the interface of the fibrous filler and the PATE matrix (according to observations by, for example, an electron microscope)

The present invention provides a composition (a PATE composition) which comprises (A) 100 parts by weight of a substantially linear polyarylene thioether having more than 60 mol% of repeating para-phenylene sulfide units,

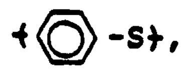

(B) 0.3 to 70 parts by weight of, as polyacrylate elastomer, poly(n-octyl acrylate) and/or poly(2-ethylhexyl acrylate), and, optionally, (C) a fibrous filler in an amount of at most 200 parts by weight based on 100 parts by weight of a mixture (A + B) of said substantially linear polyarylene thioether (A) and said polyacrylate elastomer (B).

The present invention also provides a molded product made of a composition as defined above, for example by melt-processing said composition.

In the attached drawings, Figs. 1 to 4 are scanning electron microscope photographs showing the shape of the glass fibers on broken-out sections of the test pieces of Example 1, Example 8, Comparative Example 1 and Comparative Example 4 respectively.

PATE:

Although PATE is a polymer having the repeating unit {Ar-S}, wherein Ar represents an arylene group, as a constituent, the PATE used in the present invention has repeating para-phenylene sulfide units,

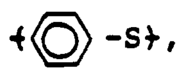

comprising a para-phenylene group and a sulfur atom, as the main constituent. The words "as the main constituent" mean that the amount of the para-phenylene group is more than 60 mol%, preferably more than 75 mol%, of the total arylene groups in the PATE.

As the arylene group, those having a para-phenylene group as the main constituent are favorable from the viewpoints of physical properties such as heat-resistance, moldability and mechanical properties.

As the arylene group other than the para-phenylene group as the main constituent, m-phenylene group

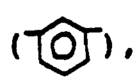

o-phenylene group

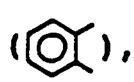

alkyl-substituted phenylene group

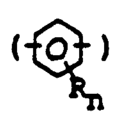

wherein R is an alkyl group, preferably a lower alkyl group, and n is an integer of 1 to 4, p,p'-diphenylene-sulfone group

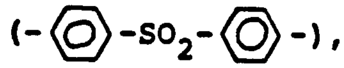

p,p'-biphenylene group

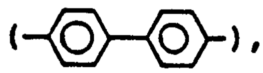

p,p'-diphenylene ether group

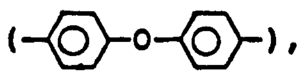

p,p'-diphenylene-carbonyl group

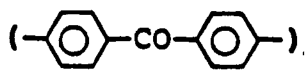

naphthalene group,

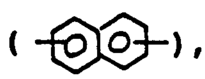

can, for example, be used.

From the viewpoint of processability, there are cases where a copolymer containing different repeating units is better than a homopolymer containing only the repeating unit

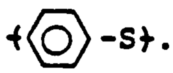

As the copolymer, those containing

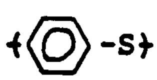

and

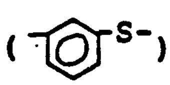

are favorable. Those containing these repeating units in a block form are better than those containing these repeating units in a random form.

Those described in JP-A-61-14228/1986 are favorable.

For instance, the para-phenylene sulfide block copolymer which substantially comprises the repeating unit (A)

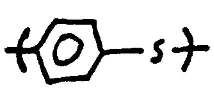

and the repeating unit

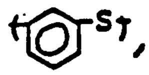

and in which the repeating units(A) exist in the molecular chain of the copolymer as a block formed by bonding, on average, 20 to 5000 repeating units(A) is favorable. Such a block copolymer has a molar fraction(x) of the repeating unit(A) in a range of 0.50 to 0.98 and a melt viscosity ($\eta^*$) of 50 to 100,000 poises (determined at a shear rate of 200 $sec^{-1}$ at 310°C) and has the properties of (a) a glass transition temperature (Tg) of 20 to 80°C, (b) a crystal melting point (Tm) of 250 to 285°C and (c) a crystallization index (Ci) of 15 to 45, this property (c) being the value of the heat-treated copolymer which has not been oriented by stretching.

Although a random-type copolymer and a block-type copolymer are nearly equal in processability, the physical properties (such as heat-resistance and mechanical properties) of the product obtained from the block-type copolymer are remarkably better than those of the product obtained from the random-type copolymer.

The amount of the repeating unit

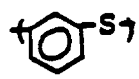

in the block copolymer is preferably 5 to 40 mol%, particularly 10 to 25 mol%.

The PATE used in the present invention is substantially linear in the construction from the viewpoints of processability and physical properties.

Substantially linear PATE is not a polymer having a cross-linked structure which is obtained by curing (treatment for increasing the melt-viscosity) by, for example, oxidative cross-linking, but rather a PATE obtained from the monomer comprising substantially the bifunctional monomer as the main body.

However, within the range of not spoiling the processability and the physical properties of PATE, a cross-linked product obtained by using a minute amount of a cross-linking agent (for instance, 1,2,4-trihalobenzene) at the time of polymerization and PATE on which thermal cross-linking has been carried out in very small quantities may be allowed.

As the polymer of the present invention, although thermally cross-linked PATE can be used, PATE which has not been thermally cross-linked is preferable.

Since thermally cross-linked PATE has many branches and cross-linked structures, from the viewpoint of properties and processability, the molded products obtained therefrom have many problems such as poor mechanical strength, severe colouring and low thermal stability at the time of melt-processing.

As the PATE used in the present invention, those having a melting point of over 250°C are favorable. When the melting point is lower than 250°C, the important feature as a heat-resistant polymer is spoiled.

The above-mentioned PATE which is favorable for the present invention can be produced economically by the method described, for instance, in JP-A-61-7332/1986, (US-A-4,645,826). Other than the above-mentioned method, the method described in, for example, JP-C-52-12240 (US-A-3,919,177), wherein PATE of a high molecular weight is obtained by adding a large amount of a polymerization aid agent such as a salt of a carboxylic acid to the polymerization system, can be used. However, the latter method is unprofitable from the economic viewpoint.

As a method for producing the PATE used in the present invention, there is the method described in the above-mentioned JP-A-61-7332 (US-A-4,645,826) concerning the production of a polyarylene sulfide having a melt-viscosity of higher than 1000 poises (determined at a shear rate of 200 $sec^{-1}$ at 310°C).

The above-mentioned method comprises a first step (1) wherein an alkali metal sulfide in an organic amide solvent is reacted with a dihalo aromatic compound in the state of existence of 0.5 to 2.4 mol of water per one mol of the alkali metal sulfide at a temperature of 180 to 235°C, thereby forming a polyarylene sulfide of a melt-viscosity of 5 to 300 poises at a conversion rate of the dihalo-aromatic compound of 50 to 98 mol%; and a second step (2) wherein water is added to the reaction system so that 2.5 to 7.0 mol of water exists per one mole of the alkali metal sulfide therein and, at the same time, the reaction temperature is raised to 245 to 290°C, to continue the above-mentioned reaction.

Another method for producing the PATE used in the present invention is described in JP-A-61-14228.

In this method a non-protonic polar organic solvent containing dihalobenzene and an alkaline metal sulfide is heated to produce a paraphenylene sulfide block copolymer substantially composed of repeating unit (A):

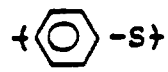

and repeating unit (B):

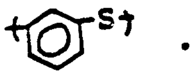

The reaction is carried out until the polymerization degree of the repeating unit (A) becomes, on average, 20 to 5000 and the molar fraction(x) of the repeating unit (A) in the formed block copolymer is from 0.50 to 0.98 to obtain a para-phenylene sulfide block copolymer having a melt-viscosity ($\eta^*$) of 50 to 100,000 poise at a shear rate of 200 $sec^{-1}$ at 310 °C, (a) a glass-transition temperature (Tg) of 20 to 80 °C, (b) a crystal melting point (Tm) of 250 to 285 °C and (c) a crystallization index (Ci) of 15 to 45 [the value (c) determined on the heat-treated copolymer which has not been oriented by stretching].

Furthermore, there is a method for producing PATE which shows a weak alkalinity, as described in JP-C-52-12240/1977 (US-A-3,919,177). In this method, dihalogenobenzene is reacted at 235 to 450 °C for 10 minutes to 3 days in an organic amide solvent in the presence of a sulfur-supplying source and a metal salt of a carboxylic acid.

PATE obtained by one of the above-mentioned methods is treated in an aqueous acidic solution having a pH of less than 2 or an aqueous solution of a salt of a strong-acid- weak-base in an amount of 0.1 to 30% by weight, and then the terminal group of the PATE is changed to

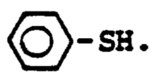

The above mentioned treatment is carried out following the method described in JP-A-62-48728/1987.

For instance, in the case of producing a PATE by the dehalogenation/sulfidization reaction of the alkali metal sulfide and the dihalo aromatic compound in a polar organic solvent, the thus formed polymer is separated from the polymerization reaction mixture after the polymerization is over, and the thus separated polymer is treated for 1 to 500 minutes at 0 to 200 °C in an aqueous strongly acidic solution having a pH of less than 2 or in an aqueous solution a salt of a strong-acid-weak-base in an amount of 0.1 to 30% by weight, thereby obtaining a PATE having a high melt-crystallization temperature. The aqueous solution, herein mentioned, means water or a mixed solvent which comprises mainly water and an alcohol, ketone or ether.

Among the PATE which is the constituent of the composition and the molded product of the present invention, the PATE which has a terminal group

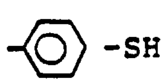

is preferable to the PATE which has a terminal group

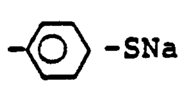

because of the smallness of the reduction of impact strength of the molded product obtained from the former PATE after annealing the molded product as compared to the latter PATE.

MODIFIER:

The modifier of the present invention, which improves the toughness and impact-strength of the PATE, is a polyacrylate elastomer or a mixture thereof.

As the above-mentioned elastomer, poly(n-octyl acrylate), poly(2-ethylhexyl acrylate) or a mixture of the two polymers is used.

Poly(n-octyl acrylate) or poly(2-ethylhexyl acrylate) may be a copolymer of n-octyl acrylate or 2-ethylhexyl acrylate with an alkylester of acrylic acid such as methyl acrylate or ethyl acrylate, an alkyl ester of methacrylic acid such as methyl methacrylate or ethyl methacrylate, a vinyl aromatic compound such as styrene, a diene compound such as butadiene or isoprene, and a vinyl ester compound such as vinyl acetate.

In the above-mentioned copolymers, the content of n-octyl acrylate or 2-ethylhexyl acrylate is more than 60 mol%, preferably more than 80 mol%, more preferably more than 90 mol%.

Moreover, the above-mentioned poly(n-octyl acrylate) or poly(2-ethylhexyl acrylate) may be a mixture with a homopolymer of an alkyl ester of acrylic acid, an alkyl ester of methacrylic acid, a vinyl aromatic compound, a diene compound or & vinyl ester compound, and the content of poly(n-octyl acrylate) or poly-(2-ethylhexyl acrylate) in the above-mentioned mixture is more than 60 mol%, preferably more than 80 mol%, more preferably more than 90 mol%. The above-mentioned elastomer which has a cross-linked structure may be used for the present invention, and the elastomer which does not have the cross-linked structure may be also used.

A polyacrylate elastomer having any form may be used for the present invention. Bulky rubber obtained by subjecting the above-mentioned monomer of the acrylate series to bulk polymerization and fine particles of rubber obtained by subjecting the monomer to emulsion polymerization can be favorably used for attaining the object of the present invention. The material made by covering the polyacrylate elastomer with a plastic component of a non-elastomer is a little poor in the effect of reinforcing the impact strength of the composition containing the fibrous filler and the molded product thereof.

In the composition having a high impact strength and in the molded product thereof, not only is it necessary that the modifier only acts as the elastic body for absorbing the impact energy and stress, but it is also necessary that the modifier acts as a coupling agent on the interface of the PATE matrix and the fibrous filler.

The modifier with a shape of covering the polyacrylate elastomer with a plastic component of a non-elastomer seems to be a little poor in the effect of the above-mentioned coupling agent (refer to Fig. 2).

Accordingly, to obtain a composition and molded product having high toughness and impact-strength, it is necessary to use a polyacrylate elastomer provided with a suitable shape.

The mixing amount of the polyacrylate elastomer to the PATE is 0.3 to 70 parts by weight, preferably 1 to 50 parts by weight, more preferably 3 to 40 parts by weight, based on 100 parts by weight of the PATE.

When less than 0.3 parts by weight of the elastomer is used, the effect of improving the toughness and impact strength is insufficient. On the other hand, when over 70 parts by weight of the elastomer is used, the physical properties such as heat-resistance, flame-retardancy and rigidity of the PATE are deteriorated.

It is favorable that the polyacrylate elastomer used in the present invention is stabilized by the addition of a heat stabilizer. As the heat stabilizer, those not dissipated, for example at the time of melt-processing, are favorable.

FIBROUS FILLER:

The PATE composition according to the present invention can be processed, even as it is, into a molded product excellent in toughness and impact strength by various melt-processing methods. However, it is preferable to use the composition combined with various fillers.

As the fibrous filler which may be used in the present invention, fibers of, for example, glass, carbon, graphite, silicon carbide, silica, alumina, zirconia, potassium titanate, calcium sulfate, calcium silicate and aramide, and natural fibers, such as wollastonite, may be used. Of these materials, glass fibers, carbon fibers and aramide fibers are favorable, particularly glass fibers.

According to the coupling material-like effect of the polyacrylate elastomer, the fibrous filler is remarkable in its effect of improving particularly the toughness and impact strength. The amount of the fibrous filler is up to 200 parts by weight based on 100 parts by weight of the mixture of PATE(A) and the polyacrylate elastomer(B), preferably from 10 to 150 parts by weight based on 100 parts by weight of the mixture of PATE(A) and the polyacrylate elastomer(B). In the case where the amount of the fibrous filler is over 200 parts by weight the melt-processing becomes difficult.

OTHER FILLERS:

In the present invention, the following fillers may also be used other than the above-mentioned fibrous filler:

(i) Inorganic fillers

Powders of, for example, talc, mica, kaolin, clay, magnesium phosphate, magnesium carbonate, calcium carbonate, calcium silicate, calcium sulfate, silica, alumina, titanium oxide, chromium oxide, iron oxide, copper oxide, zinc oxide, carbon, graphite, molybdenum disulfide and silicon may be used as the inorganic filler. Of these materials, talc, mica, kaolin and calcium carbonate powders are preferably used.

(ii) Synthetic resins and elastomers

Synthetic resins such as polyolefin, polyester, polyamide, polyimide, polyether imide, polycarbonate, polyphenylene ether, polysulfone, polyether sulfone, polyether ether ketone, polyether ketone, polyarylene, polyacetal, poly(tetrafluoroethylene), poly(difluoroethylene), polystyrene, acrylonitrile-butadiene-styrene resin, epoxy resin, silicone resin, phenol resin and urethane resin, or elastomers such as a rubber of the polyolefin series, fluorine-containing rubber and silicone rubber, may be used. Of these materials, poly(tetrafluoroethylene), polyether ether ketone, polyarylene and polyphenylene ether are preferred.

The amount of the inorganic filler is preferably up to 300 parts by weight per 100 parts by weight of the mixture of PATE and the polyacrylate elastomer. Over 300 parts by weight is not favorable, because the melt-processing becomes difficult. Furthermore, in the case of mixing both the fibrous filler and the inorganic filler, even when the same amount of the mixture is added, difficult processing of the composition differs according to the ratio of both of them. Accordingly, the amount of the fibrous filler and the amount of the inorganic filler can not be decided simply. The amounts of addition of the fibrous filler and the inorganic filler should be decided so that the melt-processing is carried out normally.

Namely, in the case of mixing both the fibrous filler and the inorganic filler, the amount of the fibrous filler is up to 200 parts by weight per 100 parts by weight of the mixture of PATE and the polyacrylate elastomer, and the amount of the inorganic filler is preferably up to 300 parts by weight per 100 parts by weight of the above-mentioned mixture. Such an amount is preferably that which makes the thus obtained composition possible to be melt-processed.

The synthetic resin and the elastomer should be combined in an amount which does not unduly spoil the resinous properties of the composition of PATE used in the present invention. Accordingly, it is generally favorable that the amount is less than the sum of the amounts of PATE and the polyacrylate elastomer.

Other than the above-mentioned fillers, a small amount of additives such as antioxidant, heat stabilizer, photostabilizer, anticorrosive agent, coupling agent, mold release agent, lubricant, colouring agent, flame retarder, foaming agent and antistatic agent may, for example, be added.

PRODUCTION OF THE COMPOSITION:

Since PATE is poorly soluble in ordinary solvents, in the case of producing the composition of PATE, the blending of the polyacrylate elastomer, the fibrous filler and the adjuvants, for example, with PATE is favorably carried out by a melt-blending method, for example, using an extruder.

The polyacrylate elastomer is powdered or cut into small pieces, and the thus treated elastomer may be melt-blended as it is with the PATE, or according to circumstances, the elastomer is once dissolved in an organic solvent to form a solution and the solution is mixed with the PATE. After removing the solvent from the thus formed mixture, the thus treated mixture may be subjected to melt-blending.

Another method for producing the composition of the present invention will be exemplified as follows:

The polyacrylate elastomer is produced by emulsion polymerization, and after adding the necessary amount of the thus obtained elastomer to PATE which has been dispersed in water, the product is collected by acidifying out (salting out), washed and dried. The thus obtained dried product is then melt-blended.

Accordingly, the PATE composition of the present invention is represented by the product which is in the state wherein the resin component, namely, PATE, the polyacrylate elastomer, the synthetic resin and the elastomer is mixed while passing through the molten state.

MOLDED PRODUCT:

The PATE composition of the present invention can give a molded product which is tough and high in impact strength by subjecting the composition to, for example, injection molding, extrusion molding, compression molding or blow molding.

The PATE composition of the present invention is used as the raw material for various molded products such as encapsulated products or sheets, films, plates, pipes, rods, profiles or bottles.

The molded product obtained from the composition of the present invention has excellent toughness and impact strength and has the maximum flexural strain (ASTM D-790) of not less than 7.0 mm, preferably more than 7.1 mm, a notched Izod strength (ASTM D-256) of not less than 8.8 kg.cm/cm and a heat-distorsion temperature (ASTM D-648 under a load of 18.6 $kg/cm^2$) of not lower than 248 °C.

From the PATE composition of the present invention, molded products in which the toughness and impact strength have been noticeably improved can be obtained at an extremely economic cost.

The present invention is further described in the following Experimental Examples and Examples.

EXPERIMENTAL EXAMPLES:

SYNTHETIC EXPERIMENTAL EXAMPLE 1:

Into a titanium-lined autoclave, 423.2 kg of hydrated sodium sulfide (purity: 46.13%) and 927 kg of N-methylpyrrolidone (NMP) were introduced, and the content of the autoclave was heated to about 203 °C to distill 167 kg of water therefrom.

Thereafter, 65.4 kg of NMP were further added into the autoclave[(total amount of water/NMP) = 3.5 mol/kg].

Next, 365.0 kg of p-dichlorobenzene were introduced into the autoclave.

After reading the contents of the autoclave for 5 hours at 220 °C, 92.5 kg of de-ionized water were added to the reaction mixture [(total amount of water/NMP) = 8.75 mol/kg], and the mixture was subjected to polymerization for 0.75 hour at 265 °C and then for 4 hours at 254 °C.

The reaction liquid was sifted by a 0.1mm opening screen, and only the granular polymer was separated, washed with acetone and then with de-ionized water to obtain the washed polymer.

The thus washed polymer was immersed in an aqueous 2 % solution of $NH_4Cl$ while setting a part thereof aside as it was, and the thus treated polymer was further treated for 30 minutes at 40 °C. After washing the thus treated polymer with de-ionized water, the thus washed polymer was dried at 80 °C under a reduced pressure to obtain PATE-A. The melt-viscosity of PATE-A was 1600 poise (160 Pa•s) (at 310 °C and a shear rate of 200 $sec^{-1}$).

SYNTHETIC EXPERIMENTAL EXAMPLE 2:

The half of the above-mentioned washed polymer of Synthetic Experimental Example 1 which had been set aside without being immersed into the aqueous 2 % solution of $NH_4Cl$ was dried under reduced pressure at 80 °C to obtain PATE-B. Another half of the washed polymer was immersed into an aqueous solution of HCl of about pH 1 for 30 minutes at room temperature and after washing the polymer sufficiently with de-ionized water, the thus washed polymer was dried under reduced pressure at 80 °C to obtain PATE-C.

SYNTHETIC EXPERIMENTAL EXAMPLE 3:

Into a glass pressure bottle of a one litre capacity 500 g of 2-ethylhexyl acrylate and 2.5 g of $\alpha,\alpha'$-azobisisobutylonitrile(AIBN) were introduced and, after substituting air in the pressure bottle for gaseous nitrogen, the contents of the bottle were reacted for 10 hours while rotating the pressure bottle in a water bath at 60 °C. The temperature was then raised to about 90 °C and maintained further for 5 hours to complete the reaction.

After cooling the reaction system, a bulky rubber (Mod-1) was obtained as the reaction product.

SYNTHETIC EXPERIMENTAL EXAMPLE 4:

In the same manner as in Synthetic Experimental Example 3 except for using 475 g of 2-ethylhexyl acrylate and 25 g of styrene, a bulky rubber of a copolymer of 2-ethylhexyl acrylate and styrene (Mod-2)

was obtained.

SYNTHETIC EXPERIMENTAL EXAMPLE 5:

Into a 10 litre autoclave, 4500 g of de-ionized water, 15 g of sodium laurylbenzenesulfonate, 1500 g of 2-ethylhexyl acrylate, 15 g of trimethylolpropane triacrylate, 7.5 g of diisopropylbenzene hydroperoxide as the polymerization initiator, 7.5 g of Rongalit, 0.048 g of ferrous sulfate, 0.072 g of disodium ethylenediaminetetraacetate(EDTA) and 3 g of sodium pyrophosphate were introduced. After substituting the air in the autoclave for gaseous nitrogen, the contents of the autoclave were reacted for 16 hours at 50 °C to obtain a latex of poly(2-ethylhexyl acrylate) (Mod-3).

SYNTHETIC EXPERIMENTAL EXAMPLE 6:

In the same manner as in Synthetic Experimental Example 5 except for using n-butyl acrylate instead of 2-ethylhexy acrylate, a latex of poly(n-butyl acrylate)(Mod-4) was obtained.

SYNTHETIC EXPERIMENTAL EXAMPLE 7:

Into a 10 litre autoclave, 4500 g of de-ionized water, 10 g of sodium laurylbenzenesulfonate, 1050 g of 2-ethylhexyl acrylate, 10.5 g of trimethylolpropane triacrylate, 5.25 g of diisopropylbenzene hydroperoxide as the polymerization initiator, 5.25 g of Rongalit, 0.0336 g of ferrous sulfate, 0.0504 g of EDTA and 2.1 g of sodium pyrophosphate were introduced. After substituting the air in the autoclave for gaseous nitrogen, the contents of the autoclave were reacted for 10 hours at 50 °C.

Next, 450 g of methyl methacrylate, 4.5 g of sodium laurylbenzenesulfonate, 2.25 g of diisopropylbenzene hydroperoxide, 2.25 g of Rongalit, 0.0144 g of ferrous sulfate, 0.0216 g of EDTA and 0.9 g of sodium pyrophosphate were further introduced into the autoclave. After substituting the air in the autoclave for gaseous nitrogen, the contents of the autoclave were further reacted for 10 hours at 50 °C.

After cooling the thus formed latex, the latex subjected to salting out using an aqueous 0.5 % solution of $CaCl_2$ and the product was sufficiently washed with deionized water and dried to obtain a modifier (Mod-5).

The commerciallized PATE, the commerciallized modifier, the filler and the antioxidant which were used in the following Examples and Comparative Examples are as follows:

Commerciallized PATE: [Ryton P-4®] made by Phillips Petroleum Co. Further, [Ryton P-4®] is PATE which has a cross-linked and branched structure and is obtained by heating a substantially linear PATE in air. The melt-viscosity of the commerciallized PATE was about 1600 poise (160 Pa•s) (at 1200 $sec^{-1}$ at 310 °C).

Commerciallized modifier:

| | |
|---|---|
| Rubber of SBR series: | [TUFPRENE A®] made by ASAHI KASEI Co., Ltd. |
| Rubber of NBR series: | [ZETPOL-2020®] made by NIHON ZEON Co., Ltd. |
| Rubber of olefine series: | [TAFMER-A®] made by MITSUI petrochem. Co., Ltd. |

Filler:

| | |
|---|---|
| Glass fiber: | [CSO3J-942CB®] (diameter of 10 micrometers) made by NITTO BOSEKI Co., Ltd. |
| Antioxidant: | [YOSHINOX SR®] made by YOSHITOMI SEIYAKU Co., Ltd. |

EXAMPLE 1:

Into 5 litres of toluene, 300 g of poly(2-ethylhexyl acrylate) (Mod-1) were dissolved. Into the thus formed solution, 1500 g of PATE-A, 6 g of the antioxidant and 1200 g of the glass fibers were added, and after evaporating the greater part of toluene while stirring the thus formed mixture at times, the remaining toluene was completely removed from the mixture in a vacuum drier.

The thus obtained material was supplied to a twin-screw kneading extruder and melt-kneaded at about 320 °C. The thus kneaded material was extruded in strands and cut into pellets.

By subjecting the thus obtained pellets to injection-molding at about 320°C while using an injection-molding machine, test pieces for measuring the physical properties were obtained.

On the thus obtained test pieces, in order to evaluate the toughness and impact strength of the product, the maximum flexural strain and the Izod strength were measured respectively by the method of ASTM D-790 and the method of ASTM D-256. At the same time, in order to evaluate the heat-resistance of the product, the heat-distortion temperature(hereinafter referred to as HDT) of the test piece was measured by the method of ASTM D-648 (under a load of 18.6 kg/cm$^2$). The results are shown in Table 1.

The scanning electron microscope photograph of a broken-out section of the thus obtained test piece is shown in Fig. 1.

From Fig. 1, it is understood that the polyacrylate elastomer interposes on the surface of the glass fibers and acts as a coupling agent.

EXAMPLES 2 AND 3:

Except for setting the ratio of PATE-A to Mod-1 to 1650 g: 150 g and 1350 g: 450 g, respectively and regulating the amount of toluene used according to the amount of rubber used, test pieces for measuring the physical properties of the product were made by the same method as in Example 1, and the maximum flexural strain, the Izod strength and HDT of the test pieces were measured. The results are shown in Table 1.

EXAMPLE 4:

In the same manner as in Example 1 except for using Mod-2 instead of Mod-1 as in Example 1, test pieces were produced, and the maximum flexural strain, the Izod strength and HDT of the test pieces were measured. The results are shown in Table 1.

EXAMPLE 5:

After weighing a latex containing 300 g of poly-(2-ethylhexyl acrylate)(Mod-3), 1500 g of PATE-A and 6 g of the antioxidant were mixed with the latex. After subjecting the mixture to salting out using an aqueous 5 % solution of $CaCl_2$, the product was sufficiently washed with de-ionized water and dried.

After introducing the thus obtained product and 1200 g of the glass fibers into a blender and mixing the introduced materials, the mixture was pelletized as in Example 1 to obtain test pieces for measuring the physical properties thereof.

The maximum flexural strain, the Izod strength and HDT of the test pieces are shown in Table 1.

EXAMPLES 6 AND 7:

By the same procedures as in Example 5, the ratio of PATE-A to Mod-3 was set respectively to 1650 g: 150 g and 1350 g: 450 g. In the same manner as in Example 5, the physical properties of the thus produced test pieces were measured. The results are shown in Table 1.

EXAMPLE 8:

After introducing 1500 g of PATE-A, 300 g of Mod-5, 1200 g of the glass fibers and 6 g of the antioxidant into a blender and mixing the thus introduced materials, the mixed materials were subjected to pelletization as in Example 1 to produce test pieces for measuring the physical properties thereof. The maximum flexural strain, the Izod strength and HDT of the test pieces are shown in Table 1. The scanning electronmicroscopic photograph of the broken-out surface of a test piece is shown in Fig. 2.

From Fig. 2 which shows the state of the modifier made by covering the polyacrylate elastomer with the plastic component of a non-elastomer, it is understood that the amount of the modifier interposing on the interface of PATE and the glass fibers is poor. Accordingly, the modifier has a poor coupling agent-like effect.

COMPARATIVE EXAMPLE 1:

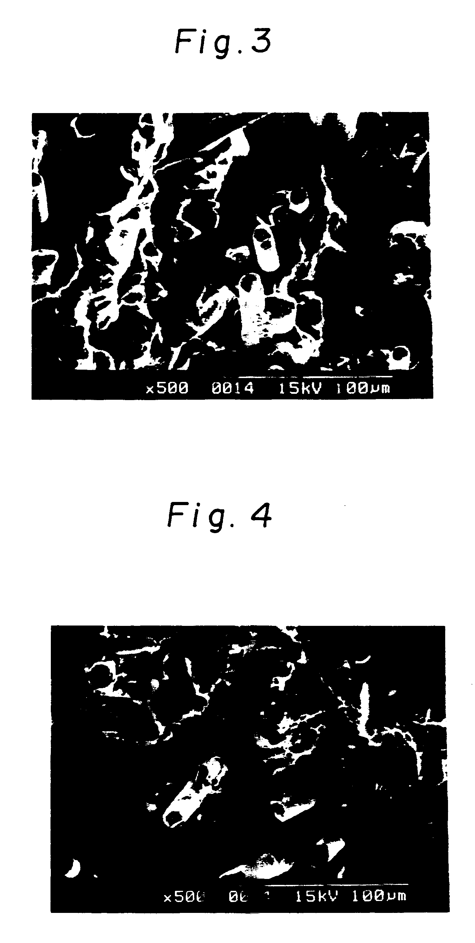

After mixing 1800 g of PATE-A and 1200 g of the glass fibers using a blender and pelletizing the thus obtained mixture as in Example 1, test pieces for measuring the physical properties thereof were produced

and the physical properties thereof were measured. The thus obtained test pieces did not contain the component(B), and the results of the tests are shown in Table 1. The scanning-electronmicroscopic photograph of the broken-out surface of the thus obtained test piece is shown in Fig. 3. No coupling effect is observed.

COMPARATIVE EXAMPLES 2, 3 AND 4:

By the same procedures as in Comparative Example 1 except for using the above-mentioned commerciallized modifier and mixing PATE-A, the commerciallized modifier and the glass fibers in the amounts of 1500 g: 300 g: 1200 g (while using 6 g of the antioxidant), test pieces were produced and the physical properties thereof were measured. The results are collectively shown in Table 1.

The scanning-electron microscope photograph of the broken-out surface of the test piece obtained in Comparative Example 4 is shown in Fig. 4. From Fig. 4, it is understood that the coupling effect is poorer than in Fig. 2. It is clear that the polyacrylate elastomer used in the present invention is superior to the commerciallized modifier.

COMPARATIVE EXAMPLE 5:

By the same procedures as in Example 5 except for using 1500 g of [Ryton P-4®] (cross-linked PATE) instead of the PATE-A in Example 5, test pieces were produced and the physical properties thereof were measured. The results are shown in Table 1.

Table 1

| | Composition (ratio by weight) | Maximum flexural strain (mm) | Izod strength (with V-notch, 23°C) (Kg.cm/cm) | HDT (*1) (°C) |
|---|---|---|---|---|
| Example - 1 | PATE-A/Mod-1/GF=50/10/40 (*2) | 8.4 | 11.2 | 256 |
| " - 2 | " =55/ 5/40 | 7.3 | 9.1 | 258 |
| " - 3 | " =45/15/40 | 8.3 | 10.9 | 249 |
| " - 4 | PATE-A/Mod-2/GF=50/10/40 | 8.3 | 11.3 | 255 |
| " - 5 | PATE-A/Mod-3/GF=50/10/40 | 8.4 | 10.6 | 256 |
| " - 6 | " =55/ 5/40 | 7.5 | 8.9 | 258 |
| " - 7 | " =45/15/40 | 8.5 | 11.0 | 251 |
| " - 8 | PATE-A/Mod-5/GF=50/10/40 | 7.1 | 9.0 | 256 |
| Comparative Example - 1 | PATE-A/GF=60/40 (control) | 6.1 | 7.3 | 262 |
| " - 2 | PATE-A/SBR-series rubber/GF=50/10/40 | 6.3 | 6.1 | 250 |
| " - 3 | PATE-A/NBR-series rubber/GF=50/10/40 | 6.2 | 6.2 | 250 |
| " - 4 | PATE-A/Olefine rubber/GF=50/10/40 | 6.3 | 7.5 | 253 |
| " - 5 | Ryton P-4/Mod-3/GF=50/10/40 | 7.1 | 7.9 | 254 |

Notes: (*1) Thickness of the sample : 3 mm (*2) Glass fiber

EXAMPLE 9:

On the test pieces produced in Example 5, the Izod strength thereof was measured at a temperature (0 ° C) of less than room temperature. The result is shown in Table 2.

COMPARATIVE EXAMPLE 6:

On the test pieces produced in Comparative Example 1, the Izod strength thereof was measured at a temperature (0°C) of less than room temperature. The result is shown in Table 2.

COMPARATIVE EXAMPLE 7:

By the same procedures as in Example 5 except for using the latex of poly(n-butyl acrylate)(Mod-4) instead of Mod-3 in Example 5, the test pieces were produced and the Izod strength thereof was measured at a temperature (0°C) of lower than room temperature. The result is shown in Table 2.

As is seen in Table 2 the test pieces produced by using a poly(n-butyl acrylate) elastomer as the modifier are poor in impact strength at a low temperature.

TABLE 2

| | Izod strength (kg.cm/cm) (0°C) | |
|---|---|---|
| | with V-notch | without V-notch |
| Example 9 | 10.1 | 50.2 |
| Comparat. Example 6 (control) | 6.3 | 44.9 |
| Comparat. Example 7 | 8.5 | 44.4 |

EXAMPLE 10:

After subjecting the test pieces produced in Example 5 to annealing for 4 hours at 204°C, the Izod strength of the thus treated test pieces was measured. The result is shown in Table 3.

EXAMPLE 11:

By the same procedures as in Example 5 except for using PATE-C instead of PATE-A in Example 5, the test pieces were produced and the Izod strength thereof was measured. Moreover, after subjecting another test piece to annealing for 4 hours at 204°C, the Izod strength of the thus treated test piece was measured. The results are shown in Table 3.

EXAMPLE 12:

By the same procedures as in Example 5 except for using PATE-B instead of PATE-A in Example 5, the test pieces were produced and the Izod strength thereof was measured. Moreover, after subjecting another test piece to annealing for 4 hour at 204°C, the Izod strength of the thus treated test piece was measured. The results are shown in Table 3.

From Table 3, it is observed that the PATE composition having a terminal group

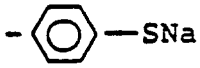

shows a large reduction of the impact strength due to annealing.

TABLE 3

| | Izod strength (V-notch, 23 ° C)(kg.cm/cm) | |
|---|---|---|
| | as molded | after annealing *) |
| Example 10 | 11.2 | 10.1 |
| Example 11 | 11.6 | 10.2 |
| Example 12 | 11.1 | 8.8 |

Note: *) for 4 hours at 204 ° C.

## Claims

1. A composition, which comprises (A) 100 parts by weight of a substantially linear polyarylene thioether having more than 60 mol% of repeating para-phenylene sulfide units,

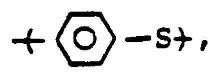

(B) 0.3 to 70 parts by weight of, as polyacrylate elastomer, poly(n-octyl acrylate) and/or poly(2-ethylhexyl acrylate), and, optionally, (C) a fibrous filler in an amount of at most 200 parts by weight based on 100 parts by weight of a mixture (A + B) of said substantially linear polyarylene thioether (A) and said polyacrylate elastomer (B).

2. A composition according to claim 1, wherein said substantially linear polyarylene thioether is a polymer which has been treated with an aqueous solution of a strong acid or of a salt of strong-acid - weak-base.

3. A composition according to claim 1 or 2, wherein said fibrous filler is glass fibers.

4. A molded product made of a composition as claimed in claims 1, 2 or 3.

5. A molded product according to claim 4, which has a maximum flexural strain (ASTM D-790) of not less than 7.0 mm, a notched Izod strength (ASTM D-256) of not less than 8.8 kg.cm/cm at 23 ° C and a heat distortion temperature (ASTM D-648, under the load of 18.6 $kg/cm^2$) of not lower than 248 ° C.

6. A molded product according to claim 4 or 5 which has been produced by melt shaping the composition.

## Patentansprüche

1. Eine Zusammensetzung, welche (A) 100 Gewichtsteile eines im wesentlichen linearen Polyarylenthioethers, welcher mehr als 60 Mol% von sich wiederholenden p-Phenylensulfideinheiten

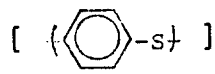

aufweist, (B) 0,3 bis 70 Gewichtsteile Poly(n-octylacrylat) und/oder Poly(2-ethyl-hexylacrylat) als Polyacrylatelastomer und gegebenenfalls (C) ein faserförmiges Füllmaterial in einer Menge von höchstens 200 Gewichtsteilen bezogen auf 100 Gewichtsteile einer Mischung (A + B) aus dem genannten im wesentlichen linearen Polyarylenthioether (A) und dem genannten Polyacrylatelastomer (B) enthält.

2. Eine Zusammensetzung gemäß Anspruch 1, worin der genannte, im wesentlichen lineare Polyarylenthioether ein Polymer ist, der mit einer wässrigen Lösung einer starken Säure oder eines Salzes aus einer starken Säure und einer schwachen Base behandelt worden ist.

3. Eine Zusammensetzung gemäß Anspruch 1 oder 2, worin das genannte faserförmige Füllmaterial Glasfasern sind.

4. Ein geformtes Produkt, welches aus einer Zusammensetzung hergestellt worden ist, wie sie in den Ansprüchen 1, 2 oder 3 beansprucht ist.

5. Ein geformtes Produkt gemäß Anspruch 4, welches eine maximale Biegungsbeanspruchung (ASTM D-790) von nicht weniger als 7,0 mm, eine Kerbfestigkeit nach Izod (ASTM D-256) bei 23 °C von nicht weniger als 8,8 kg•cm/cm und eine Hitzestörungstemperatur (ASTM D-648, unter einer Belastung von 18,6 kg/cm$^2$) von nicht weniger als 248 °C hat.

6. Ein geformtes Produkt gemäß Anspruch 4 oder 5, welches hergestellt worden ist, indem die Zusammensetzung im geschmolzenen Zustand geformt worden ist.

**Revendications**

1. Composition qui comprend (A) 100 parties en poids d'un poly(thioarylène) essentiellement linéaire possédant plus de 60 % en moles de motifs p-thiophénylène (p-$C_6H_4$-S-) répétitifs, (B) 0,3 à 70 partie-(s) en poids, comme élastomère polyacrylate, de poly(acrylate de n-octyle) et/ou de poly(acrylate de 2-éthylhexyle), et, éventuellement, (C) une charge fibreuse, à raison de 200 parties en poids au plus pour 100 parties en poids du mélange (A + B) dudit poly(thioaryléne) essentiellement linéaire (A) et dudit polyacrylate élastomère (B).

2. Composition selon la revendication 1, dans laquelle ledit poly(thioarylène) essentiellement linéaire est un polymère qui a été traité avec une solution aqueuse d'un acide fort ou d'un sel d'un acide fort et d'une base faible.

3. Composition selon la revendication 1 ou 2, dans laquelle ladite charge fibreuse est constituée de fibres de verre.

4. Produit moulé fabriqué à partir d'une composition telle que revendiquée dans l'une des revendications 1, 2 ou 3.

5. Produit moulé selon la revendication 4, qui possède une contrainte maximale à la flexion (ASTM D-790) non inférieure à 7,0 mm, une résistance Izod avec encoche (ASTM D-256) non inférieure à 8,8 kg.cm/cm a 23 °C et une température de fléchissement sous charge (ASTM D-648, sous 18,6 kg/cm$^2$) non inférieure à 248 °C.

6. Produit moulé selon la revendication 4 ou 5, qui a été fabriqué par formage à l'état fondu de la composition.

Fig.1

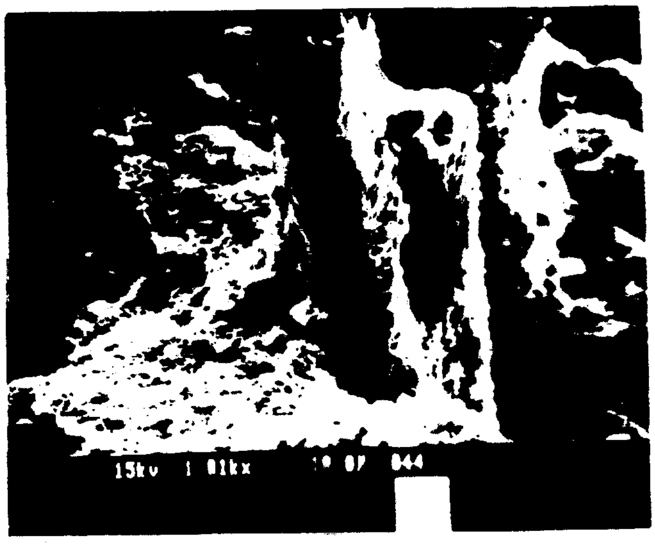

Fig.2

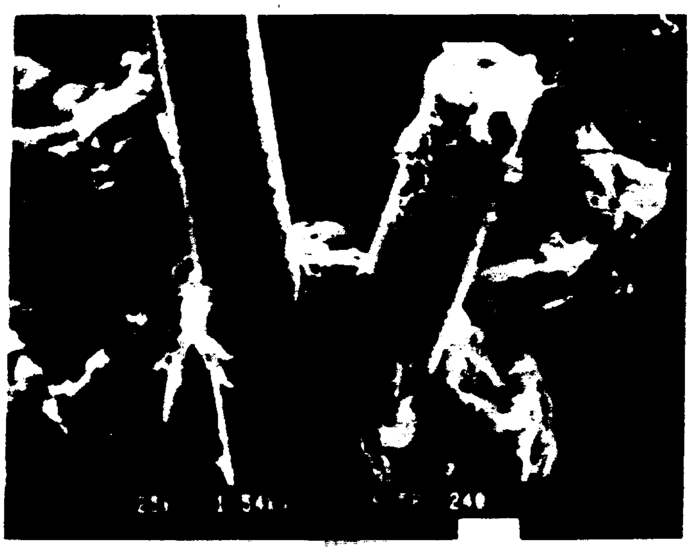

Fig.3

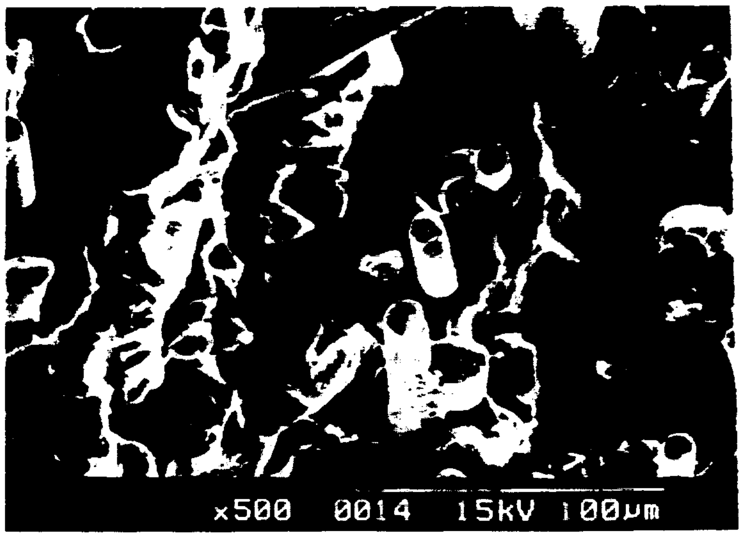


Fig. 4